# EUROPEAN PATENT SPECIFICATION

(11) **EP 0 569 125 B1**
(45) Date of publication and mention of the grant of the patent: **07.01.1999**
(21) Application number: 93302484.6
(22) Date of filing: 30.03.1993
(51) Int. Cl.: C08K 3/22, C08L 83/08

(54) **Fluorosilicone rubber compositions**
Fluorsilicon-Elastomerzusammensetzungen
Compositions élastomériques de silicone fluoré

(30) Priority: 01.04.1992 US 862014
(43) Date of publication of application: 10.11.1993
(73) Proprietor: GENERAL ELECTRIC COMPANY, Schenectady, NY 12345 (US)
(72) Inventor: Evans, Edwin Robert, Clifton Park, New York 12065 (US); Wilkens, Diana Lee, Clifton Park, New York 12065 (US)
(74) Representative: Szary, Anne Catherine, Dr.

(56) References cited:
- EP-A- 0 234 271
- DE-A- 2 257 915
- FR-A- 2 172 764
- US-A- 4 525 528
- US-A- 4 640 956
- US-A- 4 681 913
- DATABASE WPI Section Ch, Week 9114, Derwent Publications Ltd., London, GB; Class A, AN 91-096901 & JP-A-3 039 361 (SHINETSU CHEM IND KK) 20 February 1991

## Description

The present invention relates to fluorosilicone heat cured rubber compositions. More particularly, the present invention relates to fluorosilicone heat cured rubber compositions containing mixed metal oxides which provide improved heat aged characteristics and resistance to hydrocarbon oils.

Fluorosilicone heat cured rubber compositions are known in the art. Reference is made, for example, to U.S. Patent No. 4,317,899 to Blustein et al., U.S. Patent No. 4,525,528 to Bush et al. and U.S. Patent No. 4,355,121 to Evans.

US-A-3839266 discloses an organopolysiloxane composition convertible on curing to an elastomer with good heat and fire resistance comprising an organopolysiloxane rubber, a silica filler, an organic peroxide, a platinum additive and 0.5 - 25 parts of magnesium oxide per 100 parts of rubber.

EP-A-0234271 discloses compositions containing at least one liquid polydiorganosiloxane having an average of two ethylenically unsaturated hydrocarbon radicals per molecule, an organohydrogensiloxane curing agent, a platinum catalyst and a thermally conductive filler consisting, at least in part, of zinc and magnesium oxides are curable to yield elastomers. The high abrasion resistance, low durometer hardness and high heat conductivity of the elastomers make them particularly useful as coatings for the fuser rolls of electrostatic copiers.

Fluorosilicone heat cured rubbers are useful in the production of a variety of products including electrical connectors, molded inserts, tubing and hoses, sheeting, gaskets and the like. Such items are frequently used in applications in which the materials are exposed to high temperatures and hydrocarbon solvents. For example, in the automotive and aerospace industries, fluorosilicone HCR compounds are used because of their resistance to hydrocarbon oils.

In order to improve the resilience of these materials as well as lower the cost, the fluorosilicone is blended with a PDMS in a ratio of 70:30. While the resulting blends are more resilient, their resistance to hydrocarbon oils is diminished by the presence of PDMS. For example, an 80:20 blend of fluorosilicone to PDMS results in a material which is highly resistant to hydrocarbon oils. However, the material lacks adequate resilience for certain applications such as gasketing.

It is also important that the heat age characteristics of the material do not diminish significantly, especially in such gasketing applications.

It is desirable, therefore, to provide a fluorosilicone heat cured rubber composition which remains resilient at high temperatures.

It is further desirable to provide a fluorosilicone heat cured rubber composition which retains its strength characteristics in the presence of hydrocarbon oils such as hot engine oil.

The present invention is based upon the discovery that selected amounts of certain group (2A) and group (2B) metal oxides when combined with fluorosilicone HCR compositions improve resiliency and strength and increase solvent resistance.

### SUMMARY OF THE INVENTION

In one embodiment, the invention comprises a vinyl containing fluorosilicone (FS) polymer or vinyl containing FS polydimethylsiloxane (FS-PDMS) copolymer or blend, a filler, a filler surface treatment, a cross-linking agent and a heat age additive combined with selected amounts of group (2A) and (2B) metal oxides. In a particular preferred embodiment, MgO and ZnO are present in ratios of 1:3 - 1:5 and result in improved resilience, heat age characteristics and resistance to hot engine oil.

In a particular embodiment, the heat curable fluorosilicone rubber composition of the present invention comprises: (A) a fluorosilicone polymer comprising (A1) a vinyl containing, vinyl-stopped fluorosilicone polymer or (A2) or a vinyl containing, vinyl-stopped fluorosilicone polydimethylsiloxane copolymer or blend of (A1) and (A2) having a viscosity ranging from 50,000,000 to 300,000,000 cps at 25°C (A1) and (A2) having respective formulas:
A1: M^{Vi}D_{X}^{F}D_{Y}^{Vi}M^{Vi}
A2: M^{Vi}D_{X}^{F}D_{Y}^{Vi}DₓM^{Vi}
where
M^{Vi} is ViR₂SiO_{1/2}
D^{F} is R^{F}RSiO_{2/2}
D^{Vi} is ViRSiO_{2/2}
D is SiO_{1/2}
Vi is vinyl
where R is independently selected from monovalent hydrocarbon radicals free of aliphatic unsaturation containing from 1 to 8 carbon atoms, and R^{F} is a fluoro containing hydrocarbon radical, and x, y and z are chosen such that (A1) has up to 120 parts per million vinyl on chain ends and 600 parts per million vinyl on chain and (A2) has about 65 mole percent fluorosilicone PDMS at about 95 parts per million vinyl on chain and about 69 parts per million vinyl on chain ends,
(B) up to 30 parts by weight based upon component (A) of a vinyl-stopped fluorosilicone polymer having a viscosity from 50,000,000 to 300,000,000 cps at 25°C having the formula:

   M^{Vi}D_{X}D^{F}M^{Vi}

   where D and D^{F} are as defined above and containing between 80 and 140 parts per million vinyl on chain ends,
C) from 10 to 90 parts by weight based upon component (A) of a reinforcing silica filler having a surface area ranging from 150 to 225 m²/gm,
D) from 0.1 to 1.0 parts by weight based upon component A of a vinyl terminated silazane 5 having the formula:

   ViSiR₂NSiR₂Vi

   where R is as defined above,
E) from 0.5 to 5 parts by weight based upon component (A) of an M-stopped dimethylsiloxy vinylmethylsiloxy having the formula:

   MD_{X}D_{Y}^{Vi}M

   where M, D and D^{Vi} are as defined above and x and y are selected so as to result in about 14 mole percent D vinyl or about 4.2 weight percent vinyl.
F) from 19 to 23 weight percent based upon component C of a fluorosilicone disiloxanol telomeric fluid having the formula:

   HO(SiORR^{F})_{X}OH

   where R and RF are as defined above containing about 6.4 weight percent OH and x=3,
G) a heat age additive,
H) an organic peroxide or platinum curing catalyst, and
I) a mixture of group 2A and group 2B metal oxides including magnesium oxide and zinc oxide wherein magnesium oxide is present in an amount of from 0.5 to 10 parts by weight based on component (A) and zinc oxide is present in an amount of from 0.5 to 30 parts by weight based on component (A).

In one embodiment, (J) an optional cross-linking agent may be employed.

### DETAILED DESCRIPTION OF THE INVENTION:

The present invention is directed to heat curable fluorosilicone rubber compositions which exhibit good resilience after heat aging and which are resistant to hot engine oils. The improved properties of the compositions are a result of the addition of metal oxides of group 2A and 2B to polymer or copolymeric blends in preferred amounts and ratios which improve resistance of the material to thermal aging and hot oils.

In a particular embodiment, the invention comprises a fluorosilicone (FS) heat cured rubber (HCR) containing from 0.5 to 10 parts of MgO by weight based upon the polymer and from 0.5 to 30 parts of ZnO, preferably from 1 to 7 parts MgO and from 2 to 15 parts of ZnO and more preferably from 1 to 5 parts of MgO and 5 to 10 parts of ZnO. Such fluorosilicone HCR compounds have resistance to ASTM No. 1, 2, 3 and SG motor oils and have improved heat age properties.

In another embodiment, the invention comprises a fluorosilicone-polydimethylsiloxane (FS-PDMS) copolymeric HCR compound containing 0.5 to 10 parts by weight based upon the copolymer of MgO and 1 to 30 parts by weight ZnO based upon the copolymer, more preferably from 1 to 8 parts MgO and 2 to 25 parts ZnO and more preferably from 2 to 6 parts MgO and about 5 to 20 parts by weight ZnO. In the embodiment disclosed, the copolymeric HCR compound contains about 65 mole percent fluorosilicone.

The mixture of metal oxides with the FS and FS-PDMS polymers tends to enhance the resistance to hot oil by serving as acid and base acceptors which are the thermal oxidative decompositions products of the oil. The ratio of MgO to ZnO over the range of 1:3 - 1:5 appears to be the most effective for augmenting the resistance to hot oils without adversely impacting on the properties. The oxides also improve upon the resistance of the materials to thermal aging when not in the presence of hot oil.

In the present invention, the oxides are generally added to the HCR compounds after the materials have been formulated and passed through a cook cycle to remove volatiles. The temperature during the addition is less 80°C, and the additions are preferably made when the compound is in the doughmixer. Alternatively, oxides may be added to the compound while being banded on a rubber material. Either mode of addition is performed until the oxides are thoroughly dispersed.

While the addition of group 2A and 2B metal oxides, in particular those of magnesium and zinc, to protect against acids is known, the combination of magnesium oxide and zinc oxide over the range of 1:3 to 1:5 is new and particularly useful in maintaining good physical property profile.

The heat curable rubber composition of the present invention comprises a fluorosilicone HCR compound or an FS-PDMS copolymeric HCR compound containing the oxides as referred to above. In one embodiment, the FS-HCR composition comprises:
(A) a fluorosilicone polymer comprising:
   (A1) a vinyl containing fluorosilicone polymer having about 120 parts per million vinyl on chain ends and about 600 parts per million vinyl on chain; or
   (A2) a vinyl containing fluorosilicone PDMS HCR having about 69 parts per million vinyl on chain ends and about 95 parts per million vinyl on chain, (A1) and (A2) having respective formulas:
      - A1:: M^{Vi}D_{X}^{F}D_{Y}^{Vi}M^{Vi}
      - A2:: M^{Vi}D_{X}^{F}D_{Y}^{Vi}D_{Z}M^{Vi}
      where
      M^{Vi} is ViR₂SiO_{1/2}
      D^{F} is R^{F}RSiO_{2/2}
      D^{Vi} is ViRSiO_{2/2}
      D is R₂SiO_{1/2}
      wherein R is independently selected from monovalent hydrocarbon radicals free of aliphatic unsaturation containing from about 1 to about 8 carbon atoms (C₁₋₈) and R^{F} is a fluoro containing hydrocarbon radical; x, y and z are chosen such that (A1) has up to 120 parts per million vinyl on chain ends and 600 parts per million vinyl on chain and (A2) has about 65 mole percent FS-PDMS at about 95 parts per million vinyl on chain and 69 parts per million vinyl on chain ends and (A1) and (A2) have a viscosity ranging from 50,000,000 to 300,000,000, preferably from 100,000,000 to 250,000,000 and more preferably from 150,000,000 to 200,000,000 cps at 25°C.
(B) is a vinyl on chain end (vinyl stopped) fluorosilicone gum with substantially no vinyl on chain. (B) may be combined with (A1) or (A2) in amounts up to 30 parts by weight based upon 100 parts of (A1) or (A2) or blends thereof. Preferably, (B) is present in an amount from 5 to 20 parts by weight based upon 100 parts of (A) and more preferably, is present in an amount from 10 to 20 parts by weight based upon 100 parts of (A). (B) has the formula:

   M^{Vi}D_{X}D^{F}M^{Vi}

   where D^{F} is as defined above and preferably is a trifluoropropyl and x varies so that the viscosity ranged from 50,000,000 to 300,000,000 preferably from 100,000,000 to 250,000,000 and more preferably from 150,000,000 to 200,000,000 cps at 25°C. In the examples below, (B1) contains about 140 parts per million vinyl on chain ends and (B2) contains about 80 parts per million vinyl on chain end.
(C) is a silica filler. In particular, (C) is a fumed silica having a surface area of about between 150 m²/gm to 225 m²/gm. Preferably, (C) is a fumed silica having a surface area of 225 m²/gm in the untreated state and is present in an amount from 10 to 90 parts by weight based upon 100 parts of (A), and more preferably from 20 to 50 parts so that the composition has a Shore A hardness of 30 to 90.
(D) may be a vinyl stopped linear silazane having the formula:

   ViSiR₂NSiR₂Vi

   where R is as defined above. An exemplary material is tetramethyl-divinylsilazane. The material may be added as a coupling agent in-situ for enhancing the bonding of the filler to the polymer. Component (D) is present in an amount from 0.01 to 1.0 parts by weight based upon 100 parts of Component (A). Preferably, Component (D) is present and ranging from 0.07 to 0.2 parts by weight based upon 100 parts of Component (A).
(E) is an M-stopped dimethylsiloxy vinylmethylsiloxy fluid having the formula:

   MDₓD_{y}^{Vi}M

   where D and D^{Vi} are as defined above and x and y are varied so that D^{Vi} is 14 mole percent and the vinyl is about 4.2 weight percent. Component (E) may be present in amounts ranging from 0.5 to 5 parts by weight based upon Component (A) and preferably 0.5 to 2 parts by weight based upon 100 parts of Component (A).
(F) is a fluorosilicone disiloxanol telomeric fluid having the formula:

   OH(SiORR^{F})ₓOH

   wherein R and R^{F} are as defined above and containing about 6.4 weight percent OH and wherein x is about 3. Component (F) is used as an in-situ treatment for the silica filler along with Component (D) and may be present in amounts ranging from 19 to 25 percent by weight based upon Component (C) and preferably is present in an amount from between 20 and 23 percent based upon Component (C).

In addition to the foregoing, (G) a heat aging component such as (G1) iron octoate and (G2) fumed TiO₂ may be present in relatively small amounts e.g., up to about 2 parts by weight based upon Component (A). Alternatively, Ce(OH)₄ may be incorporated into the heat age additives of Components (G1) and (G2). The iron octoate is a solution of 12% iron in mineral spirits. (G1) may be present up to about .2 parts by weight based upon Component (A) and preferably is present in an amount of 0.07 parts by weight based upon Component (A). (G2) may be present in an amount up to about 2 parts by weight based upon Component (A) and is preferably present in an amount of about 0.7 parts by weight based upon Component (A).

In order to form a heat curable rubber (H) an organic peroxide free radical initiator or curing agent is provided. The preferred peroxide curing agents are thermal decomposition organic peroxides conveniently used to cure silicone elastomers. Examples of suitable organic peroxide free radical initiators for use in the present invention are disclosed, for example, in U.S. Patent No. 4,537,357. Suitable peroxide catalysts include dialkyl peroxide such as di-tertiary-butyl peroxide, tertiary-butyl-triethylmethyl peroxide, tertiary-butyl-tertiary-butyl-tertiary-triphenyl peroxide, t-butyl perbenzoate and a di-tertiary alkyl peroxide such as dicumyl peroxide. Under certain conditions hereinafter described, such as when a hydride is used, a platinum catalyst may be employed instead of an initiator.

In the examples below, the preferred catalyst (H)⁻ is a vinyl specific component such as 2.5-dimethyl-2,5-di(tert-butylperoxy)hexane, 45% on solid inert filler (CaCO₃) active O₂ content 4.96-5.29% (Luperco 101XL manufactured by Atochem, Buffalo, New York). (H) may be present in an amount ranging from 0.8 to 1.5 and preferably 1.0 parts by weight based upon Component (A).

In the present invention, Component (I) in the form of group 2A and group 2B metal oxides are incorporated into the position of the present invention. Specifically, (Ia) comprises from .5 to 10 parts by weight based upon Component (A) of magnesium oxide (MgO) and (Ib) comprises from 0.5 to 30 parts by weight based upon Component (A) of zinc oxide (ZnO). In the examples below, the magnesium oxide may be a Maglite 3231, 99.0% through 325 mesh screen sold by Merck Chemical Division, Rahway; New Jersey. The zinc oxide may be XX-78 having a particle size of 0.31 microns, 99.9% through 325 mesh screen sold by New Jersey Zinc Co., Inc., Palmerton, Pennsylvania.

In the present invention, the magnesium oxide and zinc oxide may be mixed in various proportions with the fluorosilicone elastomer (A1) or with the FS-PDMS elastomer (A2). In general, in accordance with the present invention, the preferred ratio of MgO to ZnO is from 1:3 to 1:5. In the present invention, when mixing MgO and ZnO with an FS polymer (A1), MgO is present in amounts ranging from 0.5 to 10, preferably 1 to 7 and more preferably 1 to 5 parts by weight based upon 100 parts of (A1). The ZnO is present in an amount from 0.5 to 30, preferably 2 to 15 and more preferably 5 to 10 parts by weight based upon Component (A1).

When mixed with Component (A2), the MgO is present in an amount ranging from about 0.5 to about 10, preferably from 1 to 8 and more preferably from 2 to 6 parts by weight based upon Component (A2). The ZnO is present in an amount ranging from 1 to 30, preferably 2 to 25 and more preferably from 5 to 20 parts by weight based upon Component (A2).

In the examples below, (J) an optimal cross-linking agent such as trimethylolpropane trimethacrylate may be employed.

The following compositions were prepared as follows:

### Composition I:

- (A1): 90 parts - FS polymer 120 ppm Vinyl-On-Chain-Ends (VOCE), 600 ppm Vinyl-On-Chain (VOC)
- (B1): 10 parts FS polymer 140 ppm VOCE
- (C): 44 parts fumed silica 225 m²/gm
- (D): 0.1 parts 1,3 divinyltetramethyldisilazane
- (E): 6 parts MDₓD_{y}^{Vi}M (14 mole percent D^{Vi})
- (F): 11 parts OH(SiORR^{F})ₓOH FS telomeric fluid
- (G1): 0.06 parts iron octoate (12% iron in mineral spirits)
- (G2): 0.6 parts TiO₂
- (J1): 0.5 parts trimethylolpropane trimethacrylate

### Composition II:

- (A2): 80 parts - FS-PDMS 65 mole percent FS, 69 ppm VOCE, 195 ppm VOC WP200
- (B2): 20 parts FS polymer 80 ppm VOCE
- (C): 43 parts fumed silica 225 m²/gm
- (D): 0.15 parts 13 divinyltetramethyldisilazane
- (E): 1.0 parts MDₓD_{y}^{Vi}M 14 mole percent D^{Vi}
- (F): 9.5 parts telomeric fluid OH(SiORR^{F})ₓOH
- (G1): 0.07 parts iron octoate
- (G2): 0.7 parts TiO₂

### Composition III:

(A2), (B2), (D), (E), (G1) and (G2) from Composition II
- (C): 29 parts fumed silica 225 m²/gm
- (F): 6.5 parts telomeric fluid

**TABLE 1**

| Fluorosilicone HCR Compound | | |
|---|---|---|
| Component | Comparative Example 1 | Example 2 |
| Composition (I) | 100 | 100 |
| MgO | - | 2.0 |
| ZnO | - | 6.0 |
| Luperco 101-XL | 1.0 | 1.0 |
| Press Cured 15'/177°C & Post Baked 2 hrs/200°C | | |

| Physical Properties | | |
|---|---|---|
| Shore A | 67 | 66 |
| Modulus (100%), psi | 373 | 426 |
| Tensile, psi | 1432 | 1350 |
| Elongation, % | 365 | 300 |
| Die B Tear, lb/in | 201 | 170 |
| SPG | 1.47 | 1.511 |
| Comp. Set 22 hrs/177°C, % | - | 11.1 |
| Comp. Set 22 hrs/200°C, % | - | 17.6 |
| Heat Aged 68 hrs/437°F[225°C] | | |
| ▲ Shore | +4 pts | +4 pts |
| ▲ Tensile, % | -26.47 | -8.4 |
| ▲ Elongation, % | -31.57 | -17.7 |

| Immersion ASTM #1 Oil 70 hrs/150°C[302°F] | | |
|---|---|---|
| ▲ Shore | -2 pts | -1 pts |
| ▲ Tensile, % | -5.45 | +4.3% |
| ▲ Elongation, % | -18.63 | -7.6% |

| Immersion ASTM #3 Oil 70 hrs/150°C[302°F] | | |
|---|---|---|
| ▲ Shore | +2.9 pts | +1 pts |
| ▲ Tensile, % | -42.74 | -31.0 |
| ▲ Elongation, % | -45.47 | -23.0 |

**TABLE 2**

| 60 Duro Fluorosilicone PDMS CP HCR CPD | | | | | |
|---|---|---|---|---|---|
| Component | Comparative Ex. 3 | Ex. 4 | Ex. 5 | Ex. 6 | Ex. 7 |
| Compound II | 100 | 100 | 100 | 100 | 100 |
| Parts of Zno | - | 2 | 5 | 10 | 20 |
| Parts MgO* | - | 0.5 | 2 | 3 | 4 |
| Luperco 101-XL | 1.00 | 1.00 | 1.00 | 1.00 | 1.00 |

| Press Cured 15'/177°C[350°F] and Post Baked 4hrs/204.4° C[400°F] | | | | | |
|---|---|---|---|---|---|
| shore A | 58 | 53 | 58 | 58 | 62 |
| Tensile | 1237 | 1075 | 1131 | 1010 | 920 |
| 100% Mod | 230 | 198 | 243 | 266 | 306 |
| 200% Mod | 445 | 391 | 458 | 484 | 522 |
| Elongation | 495 | 467 | 458 | 418 | 370 |
| Tear B | 216 | 216 | 197 | 181 | 154 |
| Specific Gravity | 1.44 | 1.39 | 1.49 | 1.43 | 1.48 |

| Oil Immersion Tests* | | | | | |
|---|---|---|---|---|---|
| ASTM #1 | | | | | |
| Ave Wt ▲ (%) | 0.07 | 0.15 | 0.54 | 0.30 | 0.33 |
| Ave Vol ▲ (%) | -0.06 | 0.15 | 0.50 | 0.47 | 0.56 |
| ▲ Shore (%) | 0 | -1 | 2 | 0 | 1 |
| ▲ Tensile (%) | -36.2 | -13.5 | -16.4 | -14.8 | -2.83 |
| ▲ Elongation (%) | -42.8 | -18.6 | -18.6 | -19.4 | -20.8 |
| ASTM #2 | | | | | |
| Ave Wt ▲ (%) | 0.94 | 0.70 | 1.28 | 0.83 | 0.74 |
| Ave Vol ▲ (%) | 1.44 | 1.24 | 2.07 | 1.34 | 1.21 |
| ▲ Shore (%) | 2 | 7 | 4 | 5 | 3 |
| ▲ Tensile (%) | -13.1 | -5.1 | -6.9 | -7.8 | -0.54 |
| ▲ Elongation (%) | -26.7 | -15.0 | -24.5 | -21.8 | -20.5 |
| SG Motor Oil | | | | | |
| Ave Wt ▲ (%) | 1.21 | 1.71 | 2.18 | 2.48 | 2.45 |
| Ave Vol ▲ (%) | 2.20 | 3.44 | 3.51 | 4.74 | 5.01 |
| ▲ Shore (%) | 2 | 4 | 1 | 4 | 0 |
| ▲ Tensile (%) | -38.6 | -23.0 | -23.4 | -26.5 | -12.7 |
| ▲ Elongation (%) | -42.8 | -34.5 | -29.5 | -33.5 | -32.4 |

| | | | | | |
|---|---|---|---|---|---|
| * MgO dispersed in M-stopped PDMS fluid 30,000 cps @ 25°C | | | | | |
| * Test conditions: 1 week/150°C[302°F]. | | | | | |

**TABLE 3**

| 40 Duro Fluorosilicone PDMS HCR CPD | | | | | |
|---|---|---|---|---|---|
| Component | Comparative Ex. 8 | Ex. 9 | Ex. 10 | Ex. 11 | Ex. 12 |
| Compound III | 100 | 100 | 100 | 100 | 100 |
| Parts of ZnO | - | 2 | 5 | 10 | 20 |
| Parts of MgO* | - | 0.5 | 2 | 3 | 4 |
| Luperco 101-XL | 1.00 | 1.00 | 1.00 | 1.00 | 1.00 |

| Press Cured 15'/177°C[350°F] and Post Baked 4hrs/204.4°C[400°F] | | | | | |
|---|---|---|---|---|---|
| Shore A | 39 | 39 | 39 | 43 | 47 |
| Tensile | 1393 | 1285 | 1206 | 1169 | 1013 |
| 100% Mod | 140 | 136 | 153 | 171 | 462 |
| 200% Mod | 316 | 310 | 339 | 368 | 193 |
| Elongation | 562 | 543 | 528 | 493 | 389 |
| Tear B | 198 | 207 | 199 | 192 | 164 |
| Specific Gravity | 1.39 | 1.45 | 1.54 | 1.63 | 1.58 |

| Oil Immersion Tests* | | | | | |
|---|---|---|---|---|---|
| ASTM #1 | | | | | |
| Ave Wt ▲ (%) | 0.47 | 0.41 | 0.51 | 0.62 | 0.48 |
| Ave Vol ▲ (%) | 0.98 | 0.39 | 0.37 | 0.56 | 0.36 |
| ▲ Shore (%) | -1 | 0 | -1 | -2 | -1 |
| ▲ Tensile (%) | -20.6 | -21.2 | -12.0 | -12.4 | -6.4 |
| ▲ Elongation (%) | -17.3 | -13.0 | -10.4 | -8.72 | 7.5 |
| ASTM #2 | | | | | |
| Ave Wt ▲ (%) | 1.27 | 1.01 | 1.20 | 1.00 | 1.00 |
| Ave Vol ▲ (%) | 2.04 | 1.60 | 1.60 | 1.60 | 1.80 |
| ▲ Shore (%) | 1 | -1 | 0 | -1 | 03 |
| ▲ Tensile (%) | -16 | -17.6 | -8.96 | -10.9 | -6.9 |
| ▲ Elongation (%) | -16.7 | -11.2 | -11.5 | -12.2 | 3.9 |
| SG Motor Oil | | | | | |
| Ave Wt ▲ (%) | 2.05 | 2.10 | 2.40 | 2.70 | 2.90 |
| Ave Vol ▲ (%) | 3.32 | 3.60 | 4.30 | 5.00 | 5.50 |
| ▲ Shore (%) | 0 | 1 | 1 | -2 | -2 |
| ▲ Tensile (%) | -34.2 | -39.3 | -26.0 | -33.7 | -26.8 |
| ▲ Elongation (%) | -32.9 | -27.6 | -25.4 | -25.4 | -6.9 |

| | | | | | |
|---|---|---|---|---|---|
| * MgO dispersed in M-stopped PDMS fluid 30,000 cps @ 25°C | | | | | |
| * Test conditions: 1 week/150°C[302°F]. | | | | | |

While there have been described what at present are considered to be the preferred embodiments of the present invention, it will be readily apparent to those skilled in the art that various changes may be made therein without departing from the invention and it is intended in the claims to cover such changes and modifications as fall within the true spirit and scope of the invention.

## Claims

1. A heat curable fluorosilicone rubber composition comprising:
(A) a fluorosilicone polymer including:
(A1) a vinyl containing vinyl stopped fluorosilicone polymer or,
(A2) a vinyl containing vinyl stopped fluorosilicone polydimethylsiloxane copolymer or blends of (A1) and (A2) having a viscosity ranging from 50,000,000 to 300,000,000 cps at 25°C (A1) and (A2) and having the respective formulas:
A1: M^{Vi}D_{X}^{F}D_{Y}^{Vi}M^{Vi}
A2: M^{Vi}D_{X}^{F}D_{Y}^{Vi}D_{Z}M^{Vi}
where
M^{Vi} is ViR₂SiO_{1/2}
D^{F} is R^{F}RSiO_{2/2}
D^{Vi} is ViRSiO_{2/2}
D is (CH₃)₂SiO_{2/2}
Vi is vinyl
where R is independently selected from monovalent hydrocarbon radicals free of aliphatic unsaturation containing from 1 to 8 carbon atoms (C₁₋₈) and R^{F} is a fluoro containing hydrocarbon radical, and x, y and z are chosen such that (A1) has up to 120 parts per million vinyl on chain ends and 600 parts per million vinyl on chain and (A2) has about 65 mole percent fluorosilicone PDMS at about 95 parts per million vinyl on chain and about 69 parts per million vinyl on chain ends;
(B) up to 30 parts by weight based upon 100 parts of Component (A) of a vinyl stopped fluorosilicone polymer having a viscosity from 50,000,000 to 300,000,000 cps at 25°C and having the formula:
M^{Vi}Dₓ^{f}M^{Vi}
where M^{vi} and D^{f} are as defined above; and x is chosen such that (B) has from 80 to 140 parts per million vinyl on chain ends;
(C) from 10 to 90 parts by weight based upon Component (A) of a reinforcing silica filler having a surface area ranging from 150 to 225 m²/gm;
(D) from 0.1 to 1.0 parts by weight based upon Component (A) of a vinyl terminated silazane having the formula:
ViSiR₂HNSiR₂Vi
where Vi and R are as defined above;
(E) from 0.5 to 5 parts by weight based upon Component (A) of an M-stopped dimethylsiloxy vinylmethylsiloxy having the formula:
MDₓD_{y}^{Vi}M
where M is R₃SiO_{1/2}
D is Me₂SiO_{2/2}
D^{vi} is MeViSiO_{2/2}; and x and y are selected so that Component (E) contains 14 mole percent D^{vi} or about 4.2 weight percent vinyl;
(F) from 19 to 23 weight percent based upon Component (C) of a fluorosilicone disiloxanol telomeric fluid having the formula:
HO(SiORR^{F})ₓOH
where R and R^{F} are defined above and containing about 6.3 weight percent OH and x is about 3.
(G) a heat age additive;
(H) an organic peroxide or platinum curing catalyst;
(I) a mixture of group 2A and group 2B metal oxides including magnesium oxide and zinc oxide wherein magnesium oxide is present in an amount of from 0.5 to 10 parts by weight based on component (A) and zinc oxide is present in an amount of from 0.5 to 30 parts by weight based on component (A).

2. The composition of claim 1, further including (J) up to 0.5 parts by weight based upon Component (A) of a trimethylpropane trimethacrylate cross-linking agent.

3. The composition of claim 1, wherein the catalyst comprises from 0.8 to 1.5 parts based upon Component (A) of a 2,5 dimethyl-2,5-di(tertbutylperoxy) hexane.

4. The composition according to claim 1 wherein the ratio of magnesium oxide to zinc oxide is from 1:3 to 1:5.

5. The composition according to Claim 1, wherein the heat age additive is selected from iron octoate, fumed titanium oxide and mixtures thereof.

## Patentansprüche

1. Hitzehärtbare Fluorsiliconkautschuk-Zusammensetzung, umfassend:
(A) ein Fluorsilicon-Polymer, das einschließt:
(A1) ein vinylhaltiges, Vinyl-Endgruppen aufweisendes Fluorsilicon-Polymer oder
(A2) ein vinylhaltiges, Vinyl-Endgruppen aufweisendes Fluorsilicon-Polydimethylsiloxan-Copolymer oder Mischungen von (A1) und (A2) mit einer Viskosität im Bereich von 50.000.000 bis 300.000.000 cps bei 25°C, wobei (A1) und (A2) die folgenden Formeln haben:
A1: M^{Vi}Dₓ^{F}D_{y}^{Vi}M^{Vi}
A2: M^{Vi}DₓD_{y}^{Vi}D_{z}M^{Vi}
worin
M^{Vi} ViR₂SiO_{1/2} ist,
D^{F} R^{F}RSiO_{2/2} ist,
D^{Vi} ViRSiO_{2/2} ist,
D (CH₃)₂SiO_{2/2} ist und
Vi Vinyl ist,
worin R unabhängig ausgewählt ist aus einwertigen Kohlenwasserstoffresten ohne aliphatische Ungesättigtheit mit bis 8 Kohlenstoffatomen (C₁₋₈) und R^{F} ein fluorhaltiger Kohlenwasserstoffrest ist und x, y und z derart ausgewählt sind, daß (A1) bis zu 120 ppm Vinyl an Kettenenden und 600 ppm Vinyl an der Kette aufweist und (A2) etwa 65 Mol-% Fluorsilicon PDMS bei etwa 95 ppm Vinyl an, der Kette und etwa 69 ppm Vinyl an Kettenenden hat;
(B) bis zu 30 Gewichtsteile, bezogen auf 100 Teile der Komponente (A), eines Vinyl-End-gruppen aufweisenden Fluorsilicon-Polymers mit einer Viskosität von 50.000.000 bis 300.000.000 cps bei 25°C und mit der Formel:
M^{Vi}Dₓ^{F}M^{Vi}
worin M^{Vi} und D^{F} die oben genannte Bedeutung haben und x derart ausgewählt ist, daß (B) von 80 bis 140 ppm Vinyl an Kettenenden aufweist;
(C) von 10 bis 90 Gewichtsteile, bezogen auf Komponente (A), eines verstärkenden Siliciumdioxid-Füllstoffes mit einer Oberfläche im Bereich von 150 bis 225 m²/g;
(D) von 0,1 bis 1,0 Gewichtsteil, bezogen auf Komponente (A), eines Vinyl-Endgruppen aufweisenden Silazans der Formel:
ViSiR₂HNSiR₂Vi
worin Vi und R die oben genannte Bedeutung haben;
(E) von 0,5 bis 5 Gewichtsteile, bezogen auf Komponente (A), eines M-Endgruppen aufweisenden Dimethylsiloxyvinylmethylsiloxy mit der Formel:
MDₓD_{y}^{Vi}M
worin M R₃SiO_{1/2} ist,
D Me₂SiO_{2/2} ist,
D^{Vi} MeViSiO_{2/2} ist und
x und y derart ausgewählt sind, daß Komponente (E) 14 Mol-% D^{Vi} oder etwa 4,2 Gew.-% Vinyl enthält;
(F) von 19 bis 23 Gew.-%, bezogen auf Komponente (C), einer telomeren Fluorsilicon-Disiloxanol-Flüssigkeit der Formel:
HO(SiORR^{F})ₓOH
worin R und R^{F} die oben genannte Bedeutung haben und die etwa 6,3 Gew.-% OH enthält und x etwa 3 ist;
(G) einen Wärmealterungs-Zusatz;
(H) einen organischen Peroxid- oder Platin-Härtungskatalysator;
(I) eine Mischung von Metalloxiden der Gruppe 2A und der Gruppe 2B, einschließlich Magnesiumoxid und Zinkoxid, worin Magnesiumoxid in einer Menge von 0,5 bis 10 Gewichtsteilen, bezogen auf Komponente (A) und Zinkoxid in einer Menge von 0,5 bis 30 Gewichtsteilen, bezogen auf Komponente (A), vorhanden ist.

2. Zusammensetzung nach Anspruch 1, weiter einschließend
(J) bis zu 0,5 Gewichtsteile, bezogen auf Komponente (A), eines Trimethylpropantrimethacrylats als Vernetzungsmittel.

3. Zusammensetzung nach Anspruch 1, worin der Katalysator von 0,8 bis 1,5 Teile, bezogen auf Komponente (A), eines 2,5-Dimethyl-2,5-di(tert-butylperoxy)hexans umfaßt.

4. Zusammensetzung nach Anspruch 1, worin das Verhältnis von Magnesiumoxid zu Zinkoxid von 1:3 bis 1:5 beträgt.

5. Zusammensetzung nach Anspruch, 1, worin der Wärmealterungs-Zusatz ausgewählt ist aus Eisenoctoat, pyrogenem Titanoxid und deren Mischungen.

## Revendications

1. Composition de caoutchouc de fluorosilicone thermodurcissable, comportant :
A) un polymère de type fluorosilicone, comprenant :
A1) un polymère fluorosilicone à groupes vinyle et à terminaisons vinyle, ou
A2) un copolymère polydiméthylsiloxane-fluorosilicone à groupes vinyle et à terminaisons vinyle,
ou un mélange de (A1) et (A2), dont la viscosité à 25 °C vaut de 50 000 000 à 300 000 000 cP (centipoises) et dont les formules sont respectivement les suivantes :
A1 : M^{Vi}D^{F}ₓD^{Vi}_{y}M^{Vi}
A2 : M^{Vi}D^{F}ₓD^{Vi}_{y}D_{z}M^{Vi}
dans lesquelles
M^{Vi} représente ViR₂SiO_{1/2}
D^{F} représente R^{F}RSiO_{2/2}
D^{Vi} représente ViRSiO_{2/2}
et D représente (CH₃)₂SiO_{2/2}
où Vi représente un groupe vinyle,
R est choisi, indépendamment, parmi les groupes hydrocarbonés monovalents sans insaturation aliphatique et comportant de 1 à 8 atomes de carbone (en C₁₋₈), et
R^{F} représente un groupe hydrocarboné fluoré,
et x, y et z sont choisis de telle sorte que (A1) comporte jusqu'à 120 ppm (parties par million) de groupes vinyle terminaux et 600 ppm de groupes vinyle latéraux et que (A2) contienne environ 65 % en moles de fluorosilicone avec environ 95 ppm de groupes vinyle latéraux et environ 69 ppm de groupes vinyle terminaux ;
B) jusqu'à 30 parties en poids, pour 100 parties en poids de composant (A), d'un polymère de type fluorosilicone à terminaisons vinyle dont la viscosité à 25 °C vaut de 50 000 000 à 300 000 000 cP et dont la formule est la suivante :
M^{Vi}D^{F} ₓM^{Vi}
où M^{Vi} et D^{F} ont les significations indiquées plus haut et x est choisi de telle sorte que (B) contienne de 80 à 140 ppm de groupes vinyle terminaux ;
C) de 10 à 90 parties en poids, par rapport au composant (A), d'une charge renforçante qui est une silice dont l'aire spécifique vaut de 150 à 225 m²/g ;
D) de 0,1 à 1,0 partie en poids, par rapport au composant (A), d'un silazane à terminaisons vinyle de formule
ViSiR₂NHSiR₂Vi
où Vi et R ont les significations indiquées plus haut ;
E) de 0,5 à 5 parties en poids, par rapport au composant (A), d'un diméthyl-vinylméthyl-siloxane à terminaisons M, de formule
MDₓD^{Vi}_{y}M
dans laquelle
M représente R₃SiO_{1/2}
D représente Me₂SiO_{2/2}
D^{Vi} représente MeViSiO_{2/2}
et x et y sont choisis de telle sorte que le composant (E) contienne 14 % en moles de D^{Vi} ou environ 4,2 % en poids de groupes vinyle ;
F) de 19 à 23 % en poids, par rapport au composant (C), d'un fluorosilicone-disiloxanol télomère liquide de formule
HO(SiORR^{F})ₓOH
où R et R^{F} ont les significations indiquées plus haut et x vaut à peu près 3, et contenant environ 6,3 % en poids de groupes OH ;
G) un adjuvant thermostabilisant ;
H) un catalyseur de durcissement, au platine ou de type peroxyde organique ;
et I) un mélange d'oxydes de métaux des groupes 2A et 2B, comprenant de l'oxyde de magnésium et de l'oxyde de zinc, où il y a de 0,5 à 10 parties en poids, par rapport au composant (A), d'oxyde de magnésium et de 0,5 à 30 parties en poids, par rapport au composant (A), d'oxyde de zinc.

2. Composition conforme à la revendication 1, qui comporte en outre
J) jusqu'à 0,5 parties en poids, par rapport au composant (A), d'un agent de réticulation qui est du triméthacrylate de triméthylolpropane.

3. Composition conforme à la revendication 1, dans laquelle le catalyseur consiste en 0,8 à 1,5 parties, par rapport au composant (A), de 2,5-diméthyl-2,5-di(t-butylperoxy)hexane.

4. Composition conforme à la revendication 1, dans laquelle le rapport de l'oxyde de magnésium à l'oxyde de zinc vaut de 1/3 à 1/5.

5. Composition conforme à la revendication 1, dans laquelle l'adjuvant thermostabilisant est choisi parmi l'octanoate de zinc, l'oxyde de titane "de fumée" et leurs mélanges.
